## Europäisches Patentamt
## European Patent Office
## Office européen des brevets

(19)

(11) Veröffentlichungsnummer: **0 168 569**
**B1**

(12)

# EUROPÄISCHE PATENTSCHRIFT

(45) Veröffentlichungstag der Patentschrift:
21.09.88

(51) Int. Cl.⁴: **F 16 H 47/06**

(21) Anmeldenummer: **85105429.6**

(22) Anmeldetag: **03.05.85**

(54) Getriebeaggregat für Kraftfahrzeuge mit einem stufenlos regelbaren Zugorgangetriebe.

(30) Priorität: 06.07.84 DE 3424856

(43) Veröffentlichungstag der Anmeldung:
22.01.86 Patentblatt 86/4

(45) Bekanntmachung des Hinweises auf die Patenterteilung:
21.09.88 Patentblatt 88/38

(84) Benannte Vertragsstaaten:
BE DE FR GB IT

(56) Entgegenhaltungen:
EP-A-0 003 408
EP-A-0 004 412
EP-A-0 058 834
EP-A-0 081 260
DE-A-3 203 252
GB-A-852 348
GB-A-2 064 683
US-A-3 044 316
US-A-3 203 277

(73) Patentinhaber: **FORD- WERKE AKTIENGESELLSCHAFT**, Ottoplatz 2 Postfach 21 03 69, D-5000 Köln 21 (DE)
(84) Benannte Vertragsstaaten: **BE DE IT**

(73) Patentinhaber: **FORD MOTOR COMPANY LIMITED, Eagle Way, Brentwood Essex CM13 3BW (GB)**
(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex (FR)**
(84) Benannte Vertragsstaaten: **FR**

(72) Erfinder: **Svab, Eugen, Masurenstrasse 27, D-5000 Köln 71 (DE)**

(74) Vertreter: **Ritzkowsky, Harald, Dipl.- Ing., Ford- Werke Aktiengesellschaft Patentabteilung Z/DRR- 2 Ottoplatz 2, D-5000 Köln 21 (DE)**

**Beschreibung**

Die Erfindung bezieht sich auf ein Getriebeaggregat für Kraftfahrzeuge mit einem stufenlos regelbaren Zugorgangetriebe der im Oberbegriff des Patentanspruches 1 erläuterten Art.

Aus der EP-A-81 260 ist ein Getriebeaggregat für Kraftfahrzeuge mit einem stufenlos regelbaren Zugorgangetriebe bekannt, dem ein Vorwärts-Rückwärts-Umschalt-Planetenradzugeordnet ist und das über eine hydraulische Kupplung oder über einen hydrokinetischen Drehmomentwandler von der Antriebswelle des Antriebsmotors angetrieben wird.

Bei diesem bekannten Getriebeaggregat bildet die Turbinenwelle eines hydrokinetischen Drehmomentwandlers eine Hohlwelle, die unmittelbar mit dem Eingangsglied, dem Sonnenrad des Planetenradgetriebes verbunden ist, dessen Planetenradträger das Ausgangsglied bildet, das abtriebsseitig über eine erste, feste Übersetzung mit einer Primärwelle des Zugorgangetriebes verbunden ist, die über ein Zugorgan mit einer etwa auf gleicher Höhe wie die Primärwelle liegenden Sekundärwelle treibend verbunden ist, die wieder über eine zweite, feste Übersetzung mit der in der Fahrzeuglängsmittelebene angeordneten Abtriebswelle verbunden ist.

Das bekannte Getriebeaggregat weist den Nachteil auf, daß es in seiner Länge verhältnismäßig groß baut, da sowohl die erste, feste Übersetzung als auch die vorderen Lagerungen für die Primär- und Sekundärwellen erst nachfolgend dem Planetenradgetriebe abtriebsseitig angeordnet werden können.

Die Aufgabe der Erfindung ist es, ein Getriebeaggregat für Kraftfahrzeuge der im Oberbegriff des Patentspruches 1 erläuterten Art derart zu verbessern, daß es bei geringem Bauaufwand in seiner Bauform so kompakt ausgebildet werden kann, daß es innerhalb des größeren, vorderen Bereiches eines Kardantunnels eines Kraftfahrzeuges untergebracht werden kann, wie er normalerweise zur Aufnahme einer herkömmlichen Kupplungsanordnung mit einem sich anschließenden handgeschalteten Wechselgetriebe vorhanden ist.

Gemäß der Erfindung wird diese Aufgabe gelöst, indem ein Getriebeaggregat der im Oberbegriff des Patentspruches 1 erläuterten Art die im Kennzeichenteil des Patentspruches 1 aufgezeigten Merkmale aufweist.

Im Patentanspruch 2 ist eine besonders zweckmäßige Ausgestaltung der Erfindung aufgezeigt.

Dadurch, daß das Ausgangsglied des Planetenradgetriebes antriebsseitig angeordnet ist, kann die erste, feste Übersetzung zwischen der hydraulischen Kupplungsanordnung und dem Planetenradgetriebe angeordnet werden, wodurch die verhältnismäßig aufwendigen Lagerungen für die Primär- und Sekundärwellen mit ihren voluminösen hydraulischen Verstellservos im radialen Außenbereich des Planetenradgetriebes angeordnet werden können, wodurch axialer Bauraum gespart werden kann.

Dadurch, daß bei einem Getriebeaggregat mit einem hydrokinetischen Drehmomentwandler sich die Turbinenwelle als Hohlwelle axial durch das Planetenradgetriebe erstreckt und mit dem das Eingangsglied bildenden Planetenradträger kerbverzahnt verbunden ist, der zwei Sätze von Planetenrädern trägt, die untereinander im Eingriff stehen und von denen der eine Satz in Eingriff mit einem Ringrad und der andere Satz in Eingriff mit einem Sonnenrad steht und daß das Ausgangsglied des Planetenradgetriebes bildende Sonnenrad in einem Stück mit dem ersten Teil der ersten festen Übersetzung besteht, die vor dem vorderen Lager der Primärwelle angeordnet ist, wird eine weitere Vereinfachung und Verkürzung der Bauform erzielt.

Vorzugsweise wird hierbei an der Primärwelle die Kegelscheibenanordnung mit ihrem Stellservo in Abtriebsrichtung und an der Sekundärwelle die Kegelscheibenanordnung mit ihrem Stellservo in Antriebsrichtung liegend angeordnet.

Die Eingangs- und die Abtriebswelle können in ihrer Anordnung in Verbindung mit der Primär- und der Sekundärwelle ein Achsendreieck oder einen Achsenrhombus bilden, wobei durch die letztere Anordnung eine günstige niedrige Lage der Kardanwelle erzielt werden kann.

Die Erfindung wird anhand zweier in den Zeichnungen gezeigter Ausführungsbeispiele näher erläutert.

Es zeigt:

FIG. 1    ein Getriebeschaubild einer ersten Ausführungsform der Erfindung;

FIG. 2    eine schematische Darstellung der Wellenanordnung im Kardantunnel des Kraftfahrzeuges bei festen Übersetzungen in Form von schrägverzahnten Zahnradpaaren;

FIG. 3    eine Getriebeaufrollung einer konstruktiven Ausführungsform der Erfindung und

FIG. 4    eine schematische Darstellung der Wellenanordnung im Kardantunnel des Kraftfahrzeuges bei festen Übersetzungen in Form von Kettentrieben.

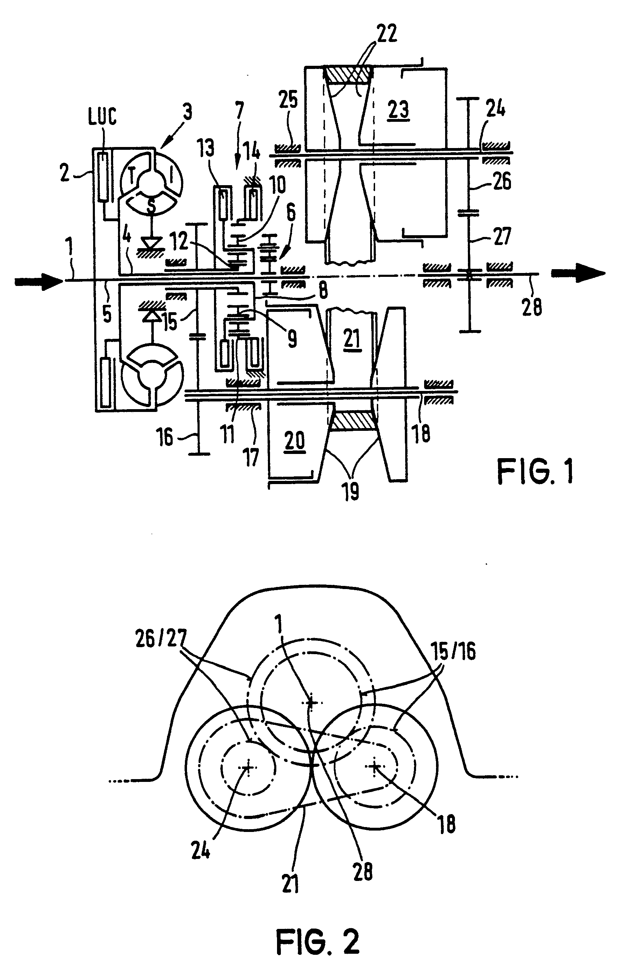

In den Figuren 1 und 2 bildet die Kurbelwelle eines Verbrennungsmotors die Antriebswelle 1, die in an sich bekannter Weise mit dem Antriebsmantel 2 eines hydrokinetischen Drehmomentwandlers 3 verbunden ist, der in bekannter Weise aus einem Pumpenteil I, einem Statorteil S und einem Turbinenteil T besteht und eine Wandlerüberbrückungskupplung LUC aufweist. Die die Eingangswelle 4 des Getriebeaggregats bildende Turbinenwelle des Drehmomentwandlers 3 kann über die Wandlerüberbrückungskupplung LUC somit zur Vermeidung von Schlupfverlusten auch unmittelbar mit dem Antriebsmantel 2 verbunden werden.

Die Antriebswelle 1 ist mit einer Pumpenwelle 5 treibend verbunden, die sich durch die als Hohlwelle ausgebildete Turbinen- oder Eingangswelle 4 zu einer als Zahnradpumpe dargestellten Druckmittelpumpe 6 erstreckt. Durch die Hohlwelle wird die Wandlerüberbrückungskupplung LUC gesteuert.

Die Turbinen- oder Eingangswelle 4 erstreckt sich axial durch ein Vorwärts-Rückwärts-Umschalt-Planetenradgetriebe 7 und ist abtriebsseitig mit dem das Eingangsglied des Planetenradgetriebes 7 bildenden Planetenradträger 8 verbunden. Der Planetenradträger 8 trägt zwei Sätze von Planetenrädern 9 und 10, die untereinander in Eingriff stehen und von denen der eine Satz 9 mit einem Ringrad 11 des Planetenradgetriebes 7 in Eingriff steht, während der Satz 10 mit einem Sonnenrad 12 des Planetenradgetriebes 7 in Eingriff steht.

Im Vorwärtsgang-Rückwärtsgang-Umschalt-Planetenradgetriebe 7 ist weiterhin eine Vorwärtsgangkupplung 13 vorgesehen über die der Planetenradträger 8 mit dem Sonnenrad 12 kuppelbar ist sowie eine Rückwärtsgangkupplung 14 über die das Ringrad 11 am Getriebegehäuse festgelegt werden kann.

Das Sonnenrad 12 bildet das Ausgangsglied des Planetenradgetriebes 7 und ist als Hohlwelle ausgebildet, die in Richtung Antrieb axial rückkehrend verläuft und einen Teil 15 einer ersten festen Übersetzung 15/16 bildet. Der zweite Teil 16 der ersten festen Übersetzung 15/16 liegt in Richtung Antrieb vor dem vorderen Lager 17 der Primärwelle 18, deren Kegelscheibenanordnung 19 derart angeordnet ist, daß das entsprechende Stellservo 20 zur Antriebsseite hin liegt.

Die Primärwelle 18 mit ihrer Kegelscheibenanordnung 19 ist über das Zugorgan 21 mit der Kegelscheibenanordnung 22 und dem Stellservo 23 der Sekundärwelle 24 treibend verbunden, deren vorderes Lager 25 axial auf Höhe der Druckmittelpumpe 6 liegt.

Die Sekundärwelle 24 ist über eine zweite feste Übersetzung 26/27 mit der Abtriebswelle 28 verbunden, die zu den angetriebenen Hinterrädern des Kraftfahrzeuges führt.

Aus Fig. 2 ist hierbei die Anordnung der Achsen der verschiedenen Wellen sowie der beiden festen Übersetzungen und der variablen Übersetzung zu ersehen.

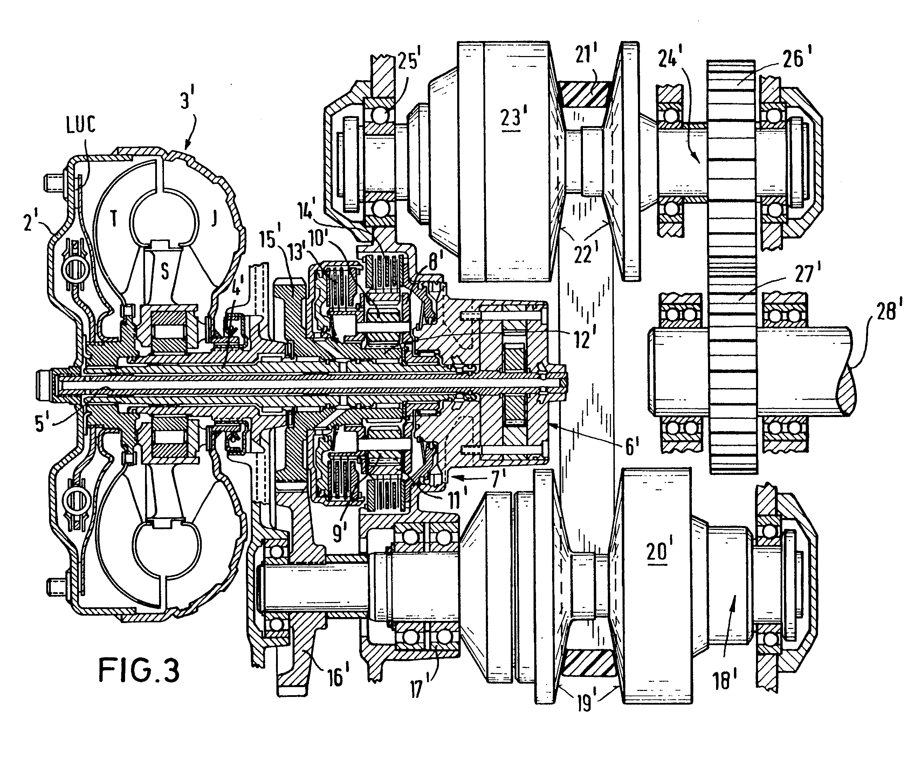

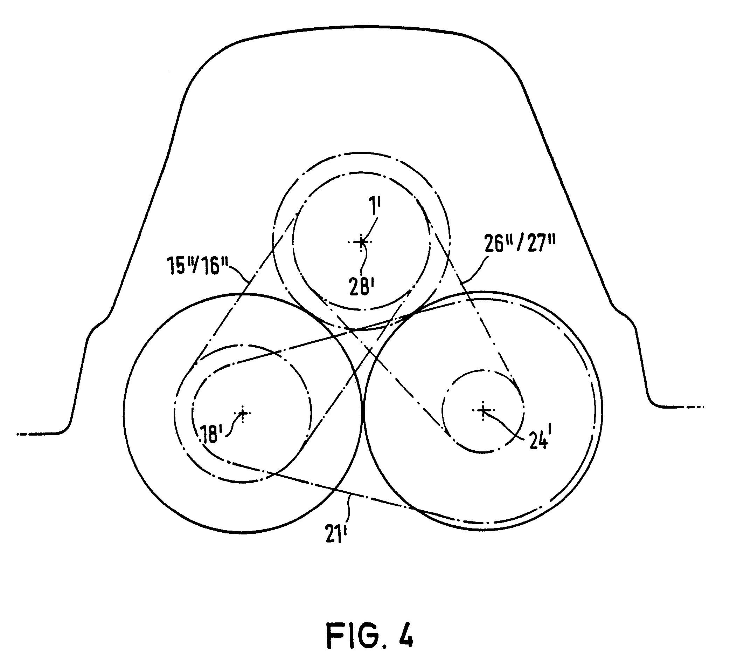

In den Figuren 3 und 4 ist eine weitere, konstruktive Ausführungsform der Erfindung gezeigt, in der lediglich die wesentlichen Bauteile mit den gleichen mit einem Strich-Index versehenen Bezugszeichen versehen sind.

Ein über seinen Antriebsmantel 2' von einem Verbrennungsmotor (nicht gezeigt) angetriebener hydrokinetischer Drehmomentwandler 3' mit einer Wandlerüberbrückungskupplung LUC weist einen Pumpenteil 1, einen Statorteil S und einen Turbinenteil T auf.

Der Turbinenteil T ist mit einer Turbinen- oder Eingangswelle 4' kerbverzahnt verbunden, die sich als Hohlwelle in Richtung Abtriebsseite erstreckt. Durch die Turbinen- oder Eingangswelle 4' erstreckt sich eine mit dem Antriebsmantel 2' treibend verbundene Pumpenwelle 5' zu einer Druckmittelpumpe 6', die abtriebsseitig von einem Vorwärts-Rückwärts-Umschaltplanetenradgetriebe 7' angeordnet ist.

Die Turbinen- oder Eingangswelle 4' erstreckt sich hierbei durch das Planetenradgetriebe 7' in Richtung Abtriebsseite und ist hier mit dem das Eingangsglied des Planetenradgetriebes 7' bildenden Planetenradträger 8' kerbverzahnt verbunden. Der Planetenradträger 8' ist mit zwei Sätzen von Planetenrädern 9' und 10' versehen, die untereinander in Eingriff stehen. Die Planetenräder 9' stehen hierbei in Eingriff mit einem Ringrad 11' des Planetenradgetriebes 7' während die Planetenräder 10' in Eingriff mit einem Sonnenrad 12' des Planetenradgetriebes 7' stehen.

Der Planetenradträger 8' ist hierbei über eine Vorwärtsgangkupplung 13' mit dem Sonnenrad 12' kuppelbar, um den Vorwärtsgangbereich des Getriebes einzustellen während das Ringrad 11' über eine Rückwärtsgangkupplung 14' am Getriebegehäuse festgelegt werden kann, um den Rückwärtsgangbereich des Getriebes zu schalten.

Das das Ausgangsglied des Planetenradgetriebes 7' bildende Sonnenrad 12' besteht in einem Stück mit einem ersten Teil 15' einer ersten festen Übersetzung 15'/16'. Der zweite Teil 16' der ersten festen Übersetzung 15'/16' ist vor dem vorderen Lager 17' der Primärwelle 18' auf dieser angeordnet.

Das vordere Lager 17' der Primärwelle 18' kann hierbei in der gleichen radialen Ebene wie das Planetenradgetriebe 7' angeordnet werden, wodurch die auf der Primärwelle 18' angeordnete Kegelscheibenanordnung 19' axial zur Antriebsseite hin verlagert werden kann. Das Stellservo 20' der Primärwelle 18' liegt hierbei vorzugsweise zur Abtriebsseite hin.

Die Primärwelle 18' treibt über das Zugorgan 21' die Kegelscheibenanordnung 22' und deren Stellservo 23' auf der Sekundärwelle 24'. Das vordere Lager 25' der Sekundärwelle 24' kann gleichfalls in der radialen Ebene des Planetenradgetriebes 7' angeordnet werden.

Die Sekundärwelle 24' ist über eine zweite feste Übersetzung 26'/27' mit der Abtriebswelle 28' treibend verbunden, die in üblicher Weise über eine Kardanwelle mit den angetriebenen Hinterrädern des Kraftfahrzeuges verbunden ist.

In Fig. 3 sind hierbei die erste und die zweite feste Übersetzung 15'/16' und 26'/27' als schrägverzahnte Zahnradsätze angedeutet, und die entsprechenden Lagerungen der Primär- und Sekundärwelle 18' und 24' sowie der Zahnräder sind nur grob angedeutet, da diese im konstruktiven Ermessen des Fachmannes liegen.

Aus der Fig. 4 sind die Achsanordnungen der verschiedenen Wellen des Getriebeaggregates zu entnehmen, wobei durch Strich-Punkt-Linien mit den Bezugzeichen 15''/16''' und 26''/27'' die mögliche Ausbildung der beiden festen Untersetzungen als Kettentriebe angedeutet sind.

Dadurch, daß bei dem Getriebeaggregat gemäß der Erfindung das Vorwärts-Rückwärts-Umschalt-Planetenradgetriebe dem Zugorgangetriebe derart vorgeschaltet ist, daß das Eingangsglied des Planetenradgetriebes zur Abtriebsseite hin und das Ausgangsglied zur Antriebsseite hin liegt, kann die vordere, erste feste Übersetzung soweit vorne zur Antriebsseite hin verlagert werden, daß die vorderen Lager der Primärwelle als auch der Sekundärwelle in der gleichen radialen Ebene angeordnete werden können, wie das Planetenradgetriebe.

Dadurch kann das Zugorgangetriebe mit seinen im Achsabstand und im Durchmesser seiner Kegelscheibenanordnungen festgelegten Abmessungen einerseits axial nach vorne und andererseits nach unten verlagert werden, so daß es im unteren weiteren Bereich eines normalen Kardantunnels eines Kraftfahrzeuges angeordnet werden kann. Damit wird eine wesentliche Voraussetzung für die Anwendung eines solchen Getriebes in der Großserie geschaffen, da natürlich der überwiegende Teil eines Großserienmodells mit einer normalen Kupplungs-Getriebeanordnung und einer dieser Anordnung angepaßten Bodengruppe gefertigt und ausgeliefert werden muß.

Bei den in den Figuren gezeigten Ausführungsformen eines erfindungsgemäßen Getriebeaggregates sind die Eingangs- und Abtriebswelle in achsgleicher Anordnung gezeigt, so daß sie mit der Primär- und Sekundärwelle ein Achsendreieck bilden.

Vorzugsweise kann jedoch die Eingangswelle zur Abtriebswelle achsparallel jedoch vertikal versetzt angeordnet werden, wodurch sie mit der Primär- und Sekundärwelle einen Achsenrhombus bilden, bei dem die Abtriebswelle und damit die Kardanwelle in erwünschter Weise tiefer liegend verläuft.

Bei Bedarf (Geländefahrzeuge und leichte Nutzfahrzeuge) bietet sich die Möglichkeit, den schon großen Übersetzungsbereich des stufenlosen Getriebes mit einer angeflanschten schaltbaren Untersetzungseinheit zu erweitern.

## Patentansprüche

1. Getriebeaggregat für Kraftfahrzeuge mit einem stufenlos regelbaren Zugorgangetriebe und einem diesem zugeordneten Vorwärts-Rückwärts-Umschalt-Planetenradgetriebe (7) insbesondere für Kraftfahrzeuge mit einem in Längsrichtung vorn angeordneten Antriebsmotor und angetriebenen Hinterrädern, wobei die Antriebswelle (1) des Antriebsmotors unmittelbar über eine hydraulische Kupplung oder über einen hydrokinetischen Drehmomentwandler (3) mit einer Eingangswelle (4) verbunden ist, die mit einem Eingangsglied (8) des Planetenradgetriebes (7) verbunden ist und wobei das Ausgangsglied (12) des Planetenradgetriebes (7) über eine erste, feste Übersetzung (15/16) mit einer Primärwelle (18) des Zugorgangetriebes verbunden ist, die Primärwelle (18) über das Zugorgan (21) mit einer seitlich etwa auf gleicher Höhe wie die Primärwelle (18) angeordneten Sekundärwelle (24) treibend verbunden ist und die Sekundärwelle (24) über eine zweite, feste Übersetzung (26/27) mit der in der Fahrzeuglängsmittelebene angeordneten Abtriebswelle (28) verbunden ist, dadurch gekennzeichnet, daß die Eingangswelle (4) außerhalb der Ebene der Primär- und Sekundärwelle (18 und 24) der Zugangangetriebes liegt und das Ausgangsglied (12) des Planetenradgetriebes (7) antriebsseitig angeordnet ist und daher die erste, feste Übersetzung (15/16) im Bereich zwischen der hydraulischen Kupplung oder dem hydrokinetischen Drehmomentwandler und dem Planetenradgetriebe (7) angeordnet werden kann.

2. Getriebeaggregat nach Anspruch 1 mit einem hydrokinetischen Drehmomentwandler, dadurch gekennzeichnet, daß sich die Turbinenwelle (4') als Hohlwelle axial durch das Planetenradgetriebe (7') erstreckt, mit dem das Eingangsglied bildenden Planetenradträger (8') des Planetenradgetriebes (7') kerbverzahnt verbunden ist, der zwei Sätze von Planetenrädern (9' und 10') trägt, die untereinander in Eingriff stehen und von denen der eine Satz in Eingriff mit einem Ringrad (11') und der andere Satz in Eingriff mit einem Sonnenrad (12') steht und daß das Ausgangsglied des Planetenradgetriebes (7') bildende Sonnenrad (12') in einem Stück mit dem ersten Teil (15') der festen Übersetzung (15'/16') besteht, die vor dem vorderen Lager (17') der Primärwelle (18') angeordnet ist.

3. Getriebeaggregat nach den Ansprüchen 1 bis 2, dadurch gekennzeichnet, daß die erste und die zweite feste Übersetzung (15/16 bzw. 15'/16' und 26/27 bzw. 26'/27') durch schrägverzahnte Zahnradpaare gebildet sind.

4. GetriebeaggregatT nach den Ansprüchen 1 bis 2, dadurch gekennzeichnet, daß die erste und die zweite feste Übersetzung (15''/16'' und 26''/27'') durch Kettentriebe gebildet sind.

5. Getriebeaggregat nach den Ansprüchen 1 bis 4, dadurch gekennzeichnet, daß an der Primärwelle (18') die Kegelscheibenanordnung (19') derart angeordnet ist, daß deren Stellservo (20') abtriebsseitig liegt und an der Sekundärwelle (24') die Kegelscheibenanordnung (22') derart angeordnet ist, daß deren Stellservo (23') antriebsseitig liegt.

6. Getriebeaggregat nach den Ansprüchen 1 bis 5, dadurch gekennzeichnet, daß die Eingangs- und Abtriebswelle (4 und 28) achsgleich angeordnet sind und mit der Primär- und der Sekundärwelle (18 und 24) ein Achsendreieck bilden.

7. Getriebeaggregat nach den Ansprüchen 1 bis 5, <u>dadurch gekennzeichnet,</u> daß die Eingangs- und Abtriebswelle (4 und 28) achsparallel jedoch vertikal versetzt angeordnet sind und mit der Primär- und der Sekundärwelle (18 und 24) einen Achsenrhombus bilden.

## Claims

1. A transmission unit for motor vehicles with a continuously variable traction member transmission and a forward-reverse-shifting planetary gear (7) associated therewith, in particular for motor vehicles with a driving engine arranged at the front in the longitudinal direction and driven rear wheels, the driving shaft (1) of the driving engine being directly connected by way of an hydraulic clutch or by way of a hydrokinetic torque converter (3) to an input shaft (4) which is connected to an input member (8) of the planetary gear (7) and the output member (12) of the planetary gear (7) being connected by way of a first fixed gearing (15/16) to a primary shaft (18) of the traction member transmission, the primary shaft (18) being connected in a driving manner by way of the traction member (21) to a secondary shaft (24) disposed laterally at approximately the same level as the primary shaft (18), and the secondary shaft (24) being connected by way of a second fixed gearing (26/27) to the driven shaft (28) which is disposed in the longitudinal median plane of the vehicle, characterized in that the input shaft (4) is situated inside the plane of the primary and secondary shafts (18 and 24) of the traction member transmission, and the output member (12) of the planetary gear (7) is arranged on the driving side and so the first fixed gearing (15/16) can be arranged in the region between the hydraulic clutch or the hydrokinetic torque converter and the planetary gear (7).

2. A transmission unit according to Claim 1 with a hydrokinetic torque converter, characterized in that the turbine shaft (4') extends as a hollow shaft axially through the planetary gear (7'), [and] is connected in a serrated manner to the planet carrier (8) of the planetary gear (7') which forms the input member and which carries two sets of planet wheels (9' and 10') which engage with each other and of which one set engages with an annulus (11') and the other set engages with a sun wheel (12') and the sun wheel (12') forming the output member of the planetary gear (7') is integral with the first part (15') of the fixed gearing (15'/16') which is arranged in front of the front bearing (17') of the primary shaft (18').

3. A transmission unit according to Claims 1 to 2 (sic), characterized in that the first and second fixed gearings (15/16 and 15'/16' respectively and 26/27 and 26'/27' respectively) are formed by pairs of helically toothed gearwheels.

4. A transmission unit according to Claims 1 to 2 (sic), characterized in that the first and second fixed gearings (15''/16'' and 26''/27'') are formed by chain drives.

5. A transmission unit according to Claims 1 to 4, characterized in that the cone-pulley arrangement (19') is mounted on the primary shaft (18') in such a way that its setting servo (20') is arranged at the take-off end, and the cone-pulley arrangement (22') is mounted on the secondary shaft (24') in such a way that its setting servo (23') is arranged at the driving end.

6. A transmission unit according to Claims 1 to 5, characterized in that the input and output shafts (4 and 28) are arranged coaxially and with the primary and the secondary shafts (18 and 24) form a triangle of axes.

7. A transmission unit according to Claims 1 to 5, characterized in that the input and output shafts (4 and 28) are arranged axially parallel but vertically offset and with the primary and the second shafts (18 and 24) form a rhombus of axes.

## Revendications

1. Groupe de transmission pour véhicules automobiles comprenant une transmission à organe de traction à variation continue et un mécanisme épicycloîdal inverseur marche avant-marche arrière (7) associé à ce train, notamment pour des véhicules automobiles comprenant un moteur d'entraînement disposé à l'avant, dans la direction longitudinale, et des roues arrière motrices, l'arbre menant (1) du moteur d'entraînement étant relié directement, par l'intermédiaire d'un accouplement hydraulique ou d'un convertisseur de couple hydrocinétique (3), à un arbre d'entrée (4) qui est relié à un organe d'entrée (8) du mécanisme épicycloîdal (7), et l'organe de sortie (12) du mécanisme épicycloîdal (7) étant relié, par l'intermédiaire d'une première démultiplication fixe (15/16) à un arbre primaire (18) de la transmission à organe de traction, l'arbre primaire (18) étant relié cinématiquement, par l'organe de traction (21) à un arbre secondaire (24) qui est disposé latéralement, à peu près à la même hauteur que l'arbre primaire (18) et l'arbre secondaire (24) étant relié, par l'intermédiaire d'une deuxième démultiplication fixe (26/ 27), à l'arbre mené (28) disposé dans le plan médian longitudinal du véhicule, caractérisé en ce que l'arbre d'entrée (4) se trouve en dehors du plan de l'arbre primaire et de l'arbre secondaire (18 et 24) de la transmission à organe de traction, et que l'organe de sortie (12) du mécanisme épicycloîdal (7) est disposé sur le côté menant, et que, par conséquent, la première démultiplication, fixe, (15/16) peut être disposée dans la région située entre l'accouplement hydraulique ou le convertisseur de couple hydrocinétique et le mécanisme épicycloîdal (7).

2. Groupe de transmission selon la revendication 1, comprenant un convertisseur de couple hydrocinétique, caractérisé en ce que l'arbre de turbine (4') forme un arbre creux qui s'étend axialement à travers le mécanisme épicycloïdal (7'), et est relié par des cannelures au porte-satellites (8') du mécanisme épicycloïdal (7') qui forme l'organe d'entrée, lequel porte deux jeux de pignons satellites (9' et 10') qui sont en prise entre eux et dont un jeu est en prise avec une couronne à denture intérieur (11') tandis que l'autre jeu est en prise avec une roue planétaire (12'), et en ce que la roue planétaire (12') qui forme l'organe de sortie du mécanisme épicycloïdal (7') est d'une seule pièce avec la première partie (15') de la démultiplication fixe (15'/16') qui est elle-même agencée en avant du palier avant (17') de l'arbre primaire (18').

3. Groupe de transmission selon les revendications 1 et 2, caractérisé en ce que la première et la deuxième démultiplications fixes (15/16 ou 15'/16' et 26/27 ou 26'/27') sont formées par des couples de roues dentées à denture oblique.

4. Groupe de transmission selon les revendications 1 et 2, caractérisé en ce que la première et la deuxième démultiplications fixes (15"/16" et 26"/27") sont constituées par des transmissions à chaîne.

5. Groupe de transmission selon les revendications 1 à 4, caractérisé en ce que la poulie à joues coniques (19') est agencée sur l'arbre primaire (18') de telle manière que son servo-moteur (20') se trouve côté mené et que la poulie à joues coniques (22') est montée sur l'arbre secondaire (24') de telle manière que son servo-moteur (23') se trouve sur le côté menant.

6. Groupe de transmission selon les revendications 1 à 5, caractérisé en ce que l'arbre d'entrée et l'arbre mené (4 et 28) sont disposés coaxialement et forment, un triangle d'axes, avec l'arbre primaire et l'arbre secondaire (18 et 24).

7. Groupe de transmission selon les revendications 1 à 5, caractérisé en ce que l'arbre d'entrée et l'arbre mené (4 et 28) sont disposés avec leurs axes parallèles mais décalés verticalement et forment, un losange d'axes, avec l'arbre primaire et l'arbre secondaire (18 et 24).

FIG. 1

FIG. 2

FIG.3

15"/16"

26"/27"

1'

28'

18'

24'

21'

FIG. 4